# EUROPEAN PATENT SPECIFICATION

(11) **EP 4 148 022 B1**
(45) Date of publication and mention of the grant of the patent: **11.11.2026**
(21) Application number: 21858452.2
(22) Date of filing: 21.06.2021
(51) Int. Cl.: C02F 1/461, C02F 1/467, C25B 1/26, C25B 11/02, C25B 9/19, C25B 1/46, C25B 9/77, C25B 9/67, C02F 103/32, C02F 103/00

(54) **ELECTRODE ASSEMBLY FOR ELECTROLYZER**
ELEKTRODENANORDNUNG FÜR EINEN ELEKTROLYSEUR
ENSEMBLE ÉLECTRODE POUR ÉLECTROLYSEUR

(30) Priority: 19.08.2020 KR 20200103860; 13.10.2020 KR 20200131649
(43) Date of publication of application: 15.03.2023
(73) Proprietor: Techwin Co., Ltd., Cheongju-si, Chungcheongbuk-do 28580 (KR)
(72) Inventor: JUNG, Boong Ik, Cheongju-si, Chungcheongbuk-do 28582 (KR); KIM, Jung Sik, Sejong-si 30098 (KR); CHO, Tae Shin, Cheongju-si, Chungcheongbuk-do 28355 (KR); CHOI, Dong Hyuck, Cheongju-si, Chungcheongbuk-do 28491 (KR); KIM, Tae Woo, Cheongju-si, Chungcheongbuk-do 28340 (KR)
(74) Representative: BCKIP Part mbB
(86) International application number: PCT/KR2021/007712
(87) International publication number: WO 2022/039364

(56) References cited:
- JP-A- 2004 143 481
- KR-A- 20060 096 843
- KR-A- 20120 014 478
- KR-A- 20120 019 656
- KR-B1- 101 944 730
- US-A- 4 069 129
- US-A- 5 225 060
- US-A1- 2002 175 072

## Description

### Technical Field of the Invention

The present invention relates to an electrode structure for an electrolyzer, and an electrolyzer including the same.

### Background Art

Sodium hypochlorite (NaOCl) is applied to various fields such as treatment of waterworks, sewage and wastewater, seawater electrolysis, ballast water treatment, sterilization and disinfection of agricultural food and food materials.

Such sodium hypochlorite is prepared by using a low-concentration sodium hypochlorite production system and a high-concentration sodium hypochlorite production system depending on concentration of sodium hypochlorite.

Low-concentration sodium hypochlorite having concentration of 0.4 to 1.0% is obtained by passing salt water through a diaphragm-free electrolyzer performing a contact-type electrode reaction. High-concentration sodium hypochlorite having concentration of 2% or more is obtained by reacting chlorine gas and caustic soda generated in a diaphragm-type electrolyzer in which a cathode and an anode are partitioned by a diaphragm.

There is a diaphragm-type electrolyzer using salt water which uses components made of a fluorine-based resin to couple and assemble an anode and a cathode. The fluorine-based resin has excellent corrosion resistance, but is easily deformed by heat, and thus may cause leakage of liquid and/or gas during long-term operation. Therefore, in order to solve the above problem and simplify facilities, an electrolyzer made of only a metal material may be configured with only a metal material.

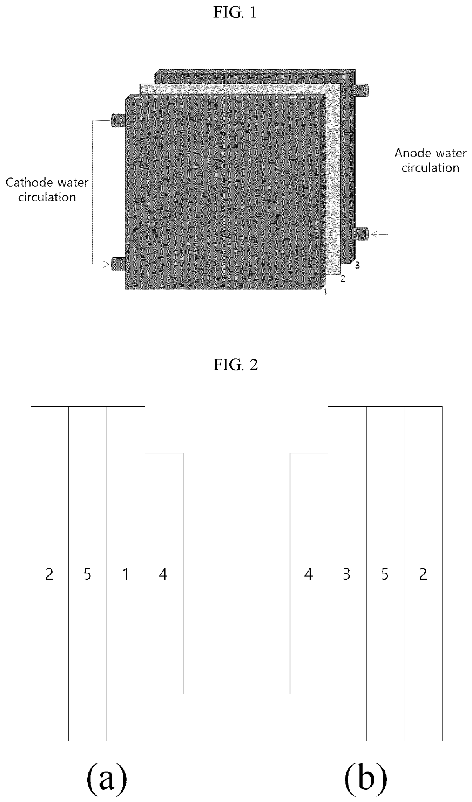

FIG. 1 illustrates a conventional electrolyzer. Referring to FIG. 1, the conventional electrolyzer for preparing sodium hypochlorite may include a cathode chamber 1, an anode chamber 3, and a diaphragm 2 for partitioning the cathode chamber and the anode chamber. The cathode chamber includes a cathode tank (not illustrated) for circulating a cathode product, and the anode chamber includes an anode tank (not illustrated) for circulating an anode product. The cathode tank and the anode tank respectively separate a gas product and a liquid product. As described above, the conventional electrolyzer circulates the cathode product and the anode product to quickly discharge gas generated in the electrolyzer and absorb heat generated in the electrolyzer through an external heat exchanger.

Moreover, chlorine gas and caustic soda generated in each of the anode chamber and the cathode chamber are moved to a reaction tank (not illustrated) via the anode tank and the cathode tank and reacted in the reaction tank, thereby generating sodium hypochlorite.

Furthermore, the conventional electrolyzer includes a caustic soda tank and an injection device for injecting caustic soda into the reaction tank and/or a sodium hypochlorite tank to maintain and stably store the generated sodium hypochlorite in pH of 12 or more, and further includes a cooling device for suppressing generation of by-products during storage of sodium hypochlorite.

As described above, the conventional electrolyzer for preparing sodium hypochlorite has several disadvantages in that anode water discharged from the anode tank contaminates surrounding environment, and in that it requires lots of maintenance fees due to a complicated configuration of a plurality of facilities, e.g., tanks, pipes, and the likes, for stably storing the manufactured high-concentration sodium hypochlorite. In addition, since chlorine gas, hydrogen gas, caustic soda, and the like generated through electrolysis are dangerous materials designated as harmful chemicals, the conventional electrolyzer may cause accidents, damages, or unnecessary risks in a case in which such harmful chemicals are transferred and circulated through a pipe exposed to the outside.

Document US 2002 / 0 175 072 A1 discloses a kit of modular components for the manufacture of an electrochemical reactor of the so-called filter press type having a substantially tubular body, closed at the opposite ends by end plates and in which is defined a sequence of electrolyte cells in fluid communication with pipes extended in said body, in a direction parallel to its axis, for the collection and distribution of process fluids. The kit comprises a plurality of electrochemically functional flat elements selected from bipolar elements and separation elements, and a plurality of frames, all identical to each other, realized with an electrically non conducting material and structured to enclose and support inside them, respective preselected electrochemically functional flat elements. Each of the frames is equipped with an equal plurality of through holes parallel to the axis of the respective frame and equally angularly arranged between consecutive frames. Each through-hole is in fluid communication with the inside of the frame through at least one passage extended in the respective frame in a substantially radial direction. The kit further includes a plurality of cylindrical bush inserts, obtained with an electrically non-conducting material, capable of being coaxially engaged in each of the through-holes in a pressurized fluid tight arrangement, to hermetically close such at least one fluid communication passage between the hole and the inside of the respective frame.

Document US 4 069 129 A discloses a filter-press type electrolytic cell including alternatively arranged frames and diaphragms fastened together to form alternating anolyte compartments and catholyte compartments, wherein said frames comprise two oppositely disposed hollow members one of which has an inlet and the other has an outlet for the flow of electrolyte solutions said inlet or outlet being on the outside surface thereof and each of said members having holes on the inside surface thereof which surfaces face each other, whereby the appropriate electrolyte is passed from said member having said inlet into the anolyte or catholyte compartment formed in the frame and the electrolyzed product is discharged from said anolyte or catholyte compartment into said member having said outlet.

Document US 5 225 060 A discloses a further filter press type electrolytic cell including a plurality of unit cells which are arranged in series through a cation exchange membrane disposed between respective adjacent unit cells.

### Disclosure of the Invention

### Technical Problem

Accordingly, the present invention has been made in view of the above-mentioned problems occurring in the related art, and it is an object of the present invention to provide an electrode structure for an electrolyzer, and an electrolyzer including the same, which can generally simplify the electrolyzer and facilities including the electrolyzer, and minimize pipes for transferring and/or circulating materials from being exposed to the outside, thereby being convenient in maintenance and management, and reducing risks due to accidents or damages.

### Technical Solution

To accomplish the above-mentioned objects, the present invention provides an electrode structure in accordance with claim 1 and an electrolyzer in accordance with claim 7. According to the present invention, there is provided an electrode structure including: an electrode plate; and a flow path guide disposed on one side of the electrode plate along the circumference of the electrode plate.

According to an embodiment, the electrode structure further includes: a cooling jacket disposed on the other side of the electrode plate.

According to an embodiment, the electrode plate and the cooling jacket are made of the same material.

According to the present invention, the electrode structure further includes: a lower through hole passing through the electrode plate and the flow path guide at a lower portion thereof; and a first flow path allowing the flow path guide and the lower through hole to communicate with each other.

According to the present invention, the electrode structure further includes: an upper through hole passing through the electrode plate and the flow path guide at an upper portion thereof; and a second flow path allowing the flow path guide and the upper through hole to communicate with each other.

According to the present invention, the electrode structure further includes: a reaction unit in which the flow path guide is not provided on one side of the electrode plate; and a third flow path connecting the flow path guide.

According to the present invention, the third flow path is provided in a lower inner wall, a side inner wall, and an upper inner wall of the flow path guide.

According to an embodiment, an area ratio of the third flow path to the inner wall of the flow path guide is 0.05 to 0.95.

According to the present invention, the reaction unit includes: an activation unit in which a liquid-phase material introduced into the reaction unit is electrolyzed; and an inactivation unit located above the activation unit so that a gas-phase material generated from the activation unit stays. A ratio of the area of the activation unit to the area of the reaction unit may be 0.1 to 0.9.

In another aspect of the present invention, there is provided an electrolyzer including: an electrode structure; and a diaphragm disposed to face one side of the electrode plate.

### Advantageous Effects

As described above, the electrode structure according to an aspect of the present invention includes: the electrode plate; and the flow path guide disposed on one side of the electrode plate along the circumference of the electrode plate to provide inflow and outflow paths of materials for the electrode structure to generally simplify the electrolyzer and facilities including the electrolyzer and minimize pipes for transferring and/or circulating materials from being exposed to the outside, thereby being convenient in maintenance and management, and reducing risks due to accidents or damages.

The effects of the present are not limited to the above-mentioned effects, and other effects, which are not specifically mentioned herein, will be clearly understood by those skilled in the art from the following description.

### Brief Description of the Drawings

FIG. 1 is a schematic diagram of a conventional electrolyzer.
FIG. 2 is a diagram illustrating an electrode structure according to an embodiment of the present invention.
FIG. 3 is a diagram illustrating a form in which the electrode structure according to an embodiment of the present invention is coupled in multiple stages.
FIG. 4 is a diagram illustrating a rear surface of an area B of FIG. 3A.
FIG. 5 is a diagram illustrating a rear surface of an area C of FIG. 3A.
FIGS. 6A and 6B are plan views of a lower inner wall and a side inner wall of a flow path guide viewed in directions D and E of FIG. 4.
FIG. 7 is a plan view of an upper inner wall of the flow path guide viewed in a direction F of FIG. 6.
FIGS. 8A and 8B are a plan view and a sectional view of a reaction unit according to an embodiment of the present invention.

### Detailed Description of Exemplary Embodiments of the Invention

Hereinafter, the present invention will be described in detail with reference to the accompanying drawings. However, embodiments of the present invention may be implemented in several different forms and are not limited to the embodiments described herein. In addition, parts irrelevant to description are omitted in the drawings in order to clearly explain embodiments of the present invention. Similar parts are denoted by similar reference numerals throughout this specification.

Throughout this specification, when a part is referred to as being "connected" to another part, this includes "direct connection" and "indirect connection" via an intervening part. Also, when a certain part "includes" a certain component, other components are not excluded unless explicitly described otherwise, and other components may in fact be included.

Hereinafter, embodiments of the present invention will be described in detail with reference to the accompanying drawings.

FIG. 2 is a diagram illustrating an electrode structure according to an embodiment of the present invention. Referring to FIG. 2, the electrode structure according to an aspect of the present invention includes: an electrode plate 1 or 3; and a flow path guide 5 provided on one side of the electrode plate along the circumference of the electrode plate, and may further include a cooling jacket 4 provided on the other surface of the electrode plate.

The electrode plate may be an anode plate 3 or a cathode plate 1. In a case in which the electrode plate is the anode plate (FIG. 2B) and in a case in which the electrode plate is the cathode plate (FIG. 2A), the cooling jacket 4 and the flow path guide 5 based on the electrode plate may be reversed with respect to each other.

In the electrolyzer including the electrode structure, the electrode plate is made of a metal material, for example, titanium, stainless steel, or the like.

The flow path guide 5 is provided on one side of the electrode plate 1 or 3 along the circumference of the electrode plate 1 or 3, and has a hollow structure in which a material moves along the inside of the electrode plate 1 or 3. In addition, a through hole and a flow path formed in the flow path guide 5 allow raw materials to flow into an inner region, in which the flow path guide 5 is not provided, of one side of the electrode plate 1 or 3, and may discharge an electrolysis product generated in the inner region to the outside.

The cooling jacket 4 may be provided on one side of the electrode plate 1 or 3 so that cooling water immediately absorbs heat generated by an electrolytic reaction. Accordingly, the present invention can simplify facilities since not requiring a heat exchanger disposed on an anode product circulation line and/or a cathode production circulation line for controlling heating in the conventional electrolyzer.

The electrode plate 1 or 3 and the cooling jacket 4 may be made of the same material. The cooling jacket 4 is provided on one side of the electrode plate 1 or 3. In a case in which the electrode structure is coupled in multiple stages, the cooling jacket is interposed between the cathode plate 1 and the anode plate 3. Accordingly, it is preferable to have predetermined conductivity so that the cathode plate 1 and the anode plate 3 are not insulated from each other.

The cooling jacket 4 may be coupled to at least one side of the cathode plate 1 and/or the anode plate 3 by welding, and may be made of the same material as the cathode plate 1 and/or the anode plate 3. The cooling jacket 4 coupled by welding may basically absorb and remove heat generated in the electrolyzer, and at the same time, electrically connect the cathode plate 1 and the anode plate 3.

Meanwhile, the cooling jacket 4 may be provided to partially and/or entirely cover an area where an electrolytic reaction occurs in the electrode plate 1 or 3, that is, a reaction unit and/or an activation unit to be described later.

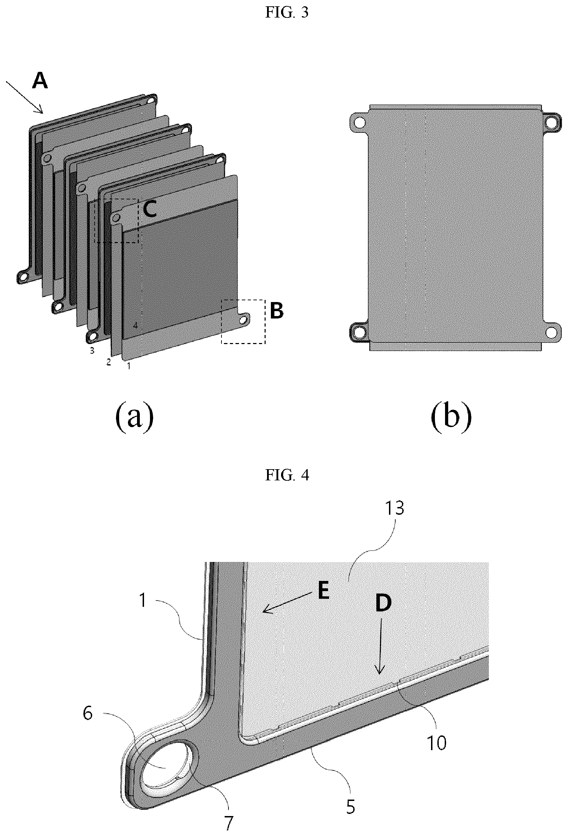

FIG. 3 is a diagram illustrating a form in which the electrode structure according to an embodiment of the present invention is coupled in multiple stages. Referring to FIG. 3A, unit structures each including the components in order of "the cooling jacket 4-the cathode plate 1-the flow path guide 5-the diaphragm 2-the flow path guide 5-the anode plate 3" may be coupled in multiple stages to constitute an electrolyzer.

FIG. 4 is a diagram illustrating a rear surface of an area B of FIG. 3A. Referring to FIG. 4, the electrode structure further includes: a lower through hole 6 passing through the electrode plate 1 and the flow path guide 5 at a lower portion thereof; and a first flow path 7 allowing the flow path guide 5 and the lower through hole 6 to communicate with each other. For example, the first flow path 7 allows the inside of the flow path guide 5 and the side wall of the lower through hole 6 to communicate with each other.

FIG. 3B is a plan view of the electrolyzer viewed in a direction A of FIG. 3A. Referring to FIG. 3B, the unit structures may be coupled in multiple stages such that the lower through hole of the cathode plate 1 and the lower through hole of the anode plate 3 overlap each other.

Raw materials are introduced into the electrolyzer through the lower through holes 6 of the cathode plate 1 and the anode plate 3. Specifically, the raw materials may be introduced into the electrolyzer substantially in a vertical direction to the electrode plate 1 or 3 through the lower through hole 6. Such raw materials may be introduced into the flow path guide 5 through the first flow path 7 which allows the inside of the flow path guide 5 and the side wall of the lower through hole 6 to communicate with each other.

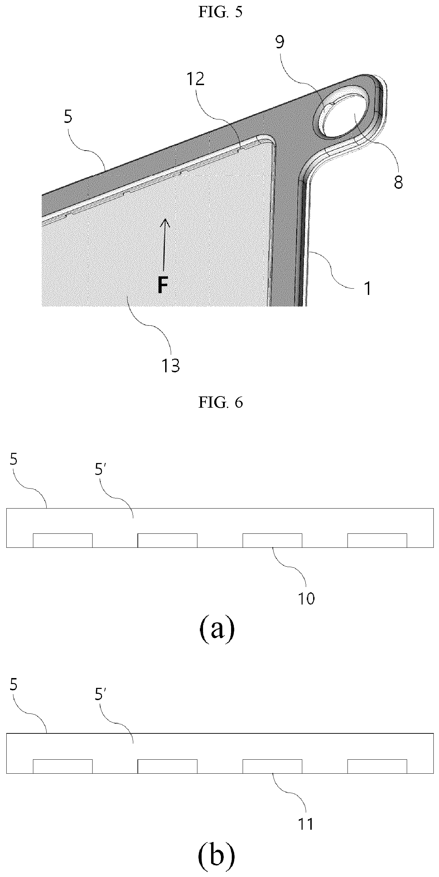

FIG. 5 is a diagram illustrating a rear surface of an area C of FIG. 3A. Referring to FIG. 5, the electrode structure further includes: an upper through hole 8 passing through the electrode plate 1 and the flow path guide 5 at an upper portion thereof; and a second flow path 9 allowing the flow path guide 5 and the upper through hole 8 to communicate with each other. For example, the second flow path 9 allows the inside of the flow path guide 5 and the side wall of the upper through hole 8 to communicate with each other.

Referring to FIG. 3B, the unit structures may be coupled in multiple stages such that the upper through hole of the cathode plate 1 and the upper through hole of the anode plate 3 overlap each other.

An anode product and a cathode product may be respectively discharged from the electrolyzer through the upper through holes 8 of the anode plate 1 and the cathode plate 3. Specifically, electrolysis product, namely, the anode product and the cathode product, may be discharged out of the electrolyzer substantially in the vertical direction to the electrode plate through the upper through hole. The anode product and the cathode product are discharged through the upper through hole 8 in an area direction of the electrode plate through the second flow path 9 allowing the side wall of the upper through hole 8 and the flow path guide 5 to communicate with each other, and then, are transferred to subsequent facilities disposed downstream.

The electrode structure further includes: a reaction unit 13 in which the flow path guide is not provided on one side of the electrode plate 1, and a third flow path connecting the flow path guide.

The third flow path is provided on an inner wall of the flow path guide 5 toward the reaction unit. The third flow path connects the inside of the flow path guide 5 and the reaction unit 13 to provide a path through which a material can move between the flow path guide and the reaction unit.

The third flow path is provided in a lower inner wall, a side inner wall, and an upper inner wall of the flow path guide.

FIGS. 6A and 6B are plan views of a lower inner wall and a side inner wall of a flow path guide viewed in directions D and E of FIG. 4.

Referring to FIG. 6A, two or more third flow paths 10 are provided in the lower inner wall 5' to be spaced apart at a predetermined interval, and thus, a material uniformly moves between the inside of the flow path guide 5 and an activation unit, which will be described later, in the reaction unit 13. Referring to FIG. 6B, two or more third flow paths 11 are provided in the side inner wall 5' to be spaced apart at a predetermined interval, and thus, a material uniformly moves between the inside of the flow path guide 5 and the reaction unit 13.

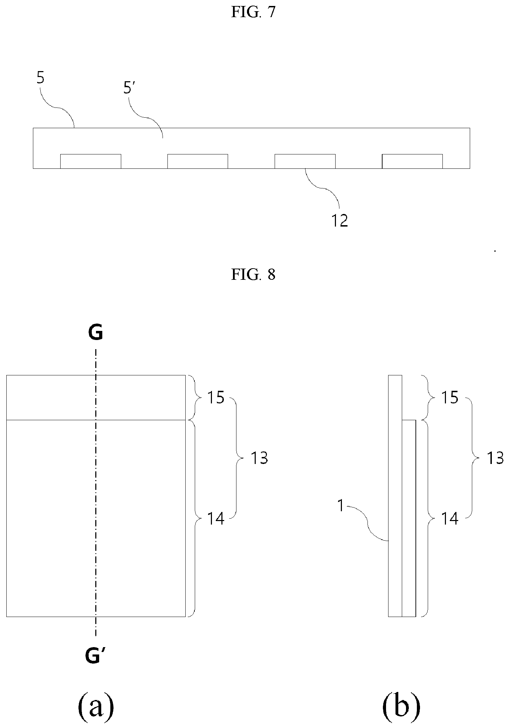

FIG. 7 is a plan view of an upper inner wall of the flow path guide viewed in a direction F of FIG. 5.

Referring to FIG. 7, two or more third flow paths 12 are provided in the upper inner wall 5' to be spaced apart at a predetermined interval, and thus, a material uniformly moves between the inside of the flow path guide 5 and an inactivation unit, which will be described later, in the reaction unit 13. The electrolysis product moving into the flow path guide 5 through the third flow path 12 disposed on the upper inner wall 5' of the flow path guide 5 may be discharged to the outside of the electrolyzer through the second flow path 9 and the upper through hole 8.

An area ratio of the third flow paths 10, 11 and 12 to the inner wall 5' of the flow path guide may be 0.05 to 0.95, preferably, 0.1 to 0.9, more preferably, 0.2 to 0.8.

If the ratio of the area of the third flow paths 10, 11, and 12 to the area of the inner wall 5' of the flow path guide is less than 0.05, 0.1, and 0.2, it may hinder movement of a material between the inside of the flow path guide 5 and the reaction unit 13. If the ratio of the area exceeds 0.95, 0.9 and 0.8, it is difficult to control the movement of the material and the balance of the material according to the movement, and it may deteriorate durability of the flow path guide 5.

FIG. 8A is a plan view of a reaction unit according to the present invention, and FIG. 8B is a sectional view taken along the line of G-G' of FIG. 8A. Referring to FIG. 8A, the reaction unit 13 includes: an activation unit 14 in which a liquid-phase material introduced into the reaction unit 13 is electrolyzed; and an inactivation unit 15 located above the activation unit 14 so that a gas-phase material generated from the activation unit 14 stays.

Referring to FIG. 8B, the inactivation unit 15 is the electrode plate 1 constituting the reaction unit 13, and the activation unit 14 is provided from a lower end of the reaction unit 13 to a predetermined height. The activation unit 14 is a metal-based plate, a sheet, or a film coupled to a lower portion of the reaction unit 13 by welding, bonding, or the like, and/or a metal-based catalyst introduced into the lower portion of the reaction unit 13 by coating or doping.

In order to electrolyze the liquid-phase material filled in the reaction unit 13 only in the activation unit 14 provided under the reaction unit 13, it is necessary that the activation unit 14 and the inactivation unit 15 are respectively made of a metal material. For instance, the inactivation unit 15, that is, the electrode plate 1, may include titanium, stainless steel, or the like, and the activation unit 14 provided on the surface of the lower portion thereof may include platinum, iridium, or the like.

Since the activation unit 14 and the inactivation unit 15 respectively partition the lower portion and the upper portion of the reaction unit 13, the movement of the material through the third flow path 11 disposed on the side inner wall of the flow path guide 5 depends on the location, namely, the height thereof.

Since the liquid including the raw material and the electrolysis product introduced through the third flow paths 10 and 11 provided on the lower inner wall and the side inner wall of the flow path guide 5 may be filled up to the upper end of the activation unit 14 in the reaction unit 13 of the electrode plate 1, a lower area of the side inner wall of the flow path guide 5, namely, at least one side of the activation unit 14, preferably, the third flow path 11 disposed at both sides is located under the surface of the liquid. A higher area, namely, at least one side of the inactivation unit 15, preferably, the third flow path 11 disposed at both sides is located above the surface of the liquid.

At least one side of the activation unit of the side inner wall of the flow path guide 5, namely, the third flow path 11 located under the surface of the liquid together with the third flow path 10 disposed in the lower inner wall of the flow path guide 5 provide a route in which raw materials introduced into the flow path guide 5 through the first flow path 7 moves to the activation unit 14 of the electrode plate, and provide a route in which a liquid-phase electrolysis product generated in the activation unit 14 moves into the flow path guide 5.

The liquid-phase electrolysis product moving into the flow path guide 5 moves upward into the second flow path 9 and the upper through hole 8 by pressure provided by the raw material introduced into the flow path guide 5 through the lower through hole 6 so as to be discharged out of the electrolyzer.

In addition, a portion of the liquid-phase electrolysis product moving into the flow path guide 5 is circulated and returned to the activation unit 14 through the third flow path 10 disposed in the lower inner wall and at least one side of the activation unit 14 of the side inner wall, namely, the third flow path 11 located under the surface of the liquid. As described above, the present invention can enhance electrolysis efficiency by circulating a portion of the liquid-phase electrolysis product to the activation unit 14.

The third flow path 11 located on at least one side of the inactivation unit 15 of the side inner wall of the flow path guide 5, namely, located above the surface of the liquid, together with the third flow path 12 disposed on the upper inner wall of the flow path guide 5, provide a route through which the gas-phase electrolysis product generated in the activation unit 14 moves into the flow path guide 5. The gas-phase electrolysis product moving into the flow path guide 5 may be discharged out of the electrolyzer through the second flow path 9 and the upper through hole 8.

Since the lower portion and the upper portion of the reaction unit 13 are respectively partitioned into the activation unit 14 and inactivation unit 15, the upper inner wall and the surface of the liquid including the raw material and the electrolysis product filled in the reaction unit 13 may be spaced apart from each other at a predetermined interval, and a predetermined space may be formed in an upper end of the reaction unit 13, concretely, in the inactivation unit 15.

Such a space may allow the gas-phase product generated by the electrolytic reaction to be smoothly discharged through the third flow paths 11 and 12, the second flow path 9, and the upper through hole 8 which are disposed above the surface of the liquid.

The activation unit 14 may be filled with the liquid including the raw material and the electrolysis product introduced through the third flow path 10 disposed in the lower inner wall of the flow path guide 5.

In a case in which the level of the liquid becomes excessively high, a space in which the gas-phase electrolysis product generated in the activation unit 14 may be narrowed. Accordingly, it is difficult to control the internal pressure of the electrolyzer, and most of the third flow path 11 provided in the side inner wall of the flow path guide 5 may be submerged under the surface of the liquid. So, it is difficult to properly provide a route through which the gas-phase electrolysis product is discharged to the outside.

Therefore, the ratio of the area of the activation unit 14 to the area of the reaction unit 13 may be designed to be within a predetermined range so that a space for smoothly maintaining or discharging the gas-phase electrolysis product above the surface of the liquid filled in the activation unit 14 can be formed.

For example, the ratio of the area of the activation unit 14 to the area of the reaction unit 13 may be 0.1 to 0.9, preferably 0.2 to 0.8, more preferably 0.3 to 0.7.

According to another aspect of the present invention, the electrolyzer includes: an electrode structure; and a diaphragm provided to face one side of the electrode plate.

Referring to FIG. 3A, unit structures each including the components in order of "the cooling jacket 4-the cathode plate 1-the flow path guide 5-the diaphragm 2-the flow path guide 5-the anode plate 3" may be coupled in multiple stages to constitute an electrolyzer.

The movement and reaction of the material in the electrolyzer in which the unit structures are coupled in multiple stages may be exemplified as follows on the basis of a sodium hypochlorite generation process through electrolysis of salt water.

The salt water introduced into the flow path guide 5 provided along the circumference of one side of the anode plate 3 may be introduced into the activation unit of the anode plate through the third flow path provided in the lower inner wall of the flow path guide 5 and the third flow path provided in the lower area of the side inner wall.

Purified water introduced into the flow path guide 5 provided along the circumference of one side of the cathode plate 1 may be introduced into the activation unit of the cathode plate through the third flow path provided in the lower inner wall of the flow path guide 5 and the third flow path provided in the lower area of the side inner wall.

In a case in which a predetermined voltage is applied to the anode plate and the cathode plate, chlorine gas (Cl₂) is generated from the activation unit of the cathode plate, and sodium ions move to the activation unit of the cathode plate through the diaphragm so that caustic soda (NaOH) and chlorine gas (H₂) are generated from the activation unit of the cathode plate.

The chlorine gas (Cl₂) and other liquid-phase products generated from the activation unit of the cathode plate may move into the flow path guide through the third flow paths disposed in the side inner wall and the upper inner wall of the flow path guide 5, and then, may be discharged to the outside of the electrolyzer through the second flow path and the upper through hole.

The hydrogen gas, the caustic soda aqueous solution, and the other liquid products generated in the activation unit of the cathode plate may move into the flow path guide through the third flow paths disposed in the side inner wall and the upper inner wall of the flow path guide 5, and then, may be discharged to the outside of the electrolyzer through the second flow path and the upper through hole.

As described above, the electrode structure and the electrolyzer including the same include: an electrode plate; a cooling jacket provided on one side of the electrode plate to absorb heat generated by an electrolytic reaction; and a flow path guide provided on one side of the electrode plate along the circumference of the electrode plate to provide an inflow path of a material with respect to the electrolyzer, thereby simplifying the electrolyzer and the facility including the electrolyzer as a whole, and minimizing the exposure of the pipe for transferring and/or circulating the material to the outside, thereby facilitating maintenance and management and reducing the risk of accidents and damage.

The above description of the present invention is just for illustration, and a person skilled in the art will understand that the present invention can be easily modified in different ways without changing essential techniques or features of the present invention. Therefore, the above embodiments should be understood as being descriptive, not limitative. For example, any component described as having an integrated form may be implemented in a distributed form, and any component described as having a distributed form may also be implemented in an integrated form.

The scope of the present invention is defined by the appended claims, rather than the above description.

### <Explanation of Reference Numerals>

1: Cathode plate (or cathode chamber)
2: Diaphragm
3: Anode plate (or anode chamber)
4: Cooling jacket
5: Flow path guide
5': Inner wall of flow path guide
6: Lower through hole
7: First flow path
8: Upper through hole
9: Second flow path
10,11,12: Third flow path
13: Reaction unit
14: Activation unit
15: Inactivation unit

## Claims

1. An electrode structure comprising:
an electrode plate (1, 3);
a flow path guide (5) disposed on one side of the electrode plate (1, 3) along the circumference of the electrode plate (1, 3);
a lower through hole (6) passing through the electrode plate (1, 3) and the flow path guide (5) at a lower portion thereof;
a first flow path (7) allowing the flow path guide (5) and the lower through hole (6) to communicate with each other;
an upper through hole (8) passing through the electrode plate (1, 3) and the flow path guide (5) at an upper portion thereof;
a second flow path (9) allowing the flow path guide (5) and the upper through hole (8) to communicate each other;
a reaction unit (13) in which the flow path guide (5) is not provided on the one side of the electrode plate (1, 3); and
two or more third flow paths (10, 11, 12) provided in a lower inner wall, a side inner wall and an upper inner wall of the flow path guide (5) and spaced apart at a predetermined interval, wherein the third flow paths (10, 11, 12) connect an inside of the flow path guide (5) and the reaction unit (13),
wherein the reaction unit (13) includes an activation unit (14) in which a liquid-phase material introduced into the reaction unit (13) is electrolyzed, and an inactivation unit (15) located above the activation unit (14) so that a gas-phase material generated from the activation unit (14) stays,
wherein the third flow paths (10) provided in the lower inner wall provide a path through which a material can uniformly move between the inside of the flow path guide (5) and the activation unit of the reaction unit (13),
wherein the third flow paths (11) provided in the side inner wall provide a path through which a material can uniformly move between the inside of the flow path guide (5) and the reaction unit (13),
wherein the third flow paths (12) provided in the upper inner wall provides a path through which a material can uniformly move between the inside of the flow path guide (5) and the inactivation unit of the reaction unit (13),
wherein the inactivation unit (15) is the electrode plate (1) constituting the reaction unit (13), and the activation unit (14) is provided from a lower end of the reaction unit (13) to a predetermined height, such that the activation unit (14) and the inactivation unit (15) respectively partition the lower portion and the upper portion of the reaction unit (13),
wherein the activation unit (14) is a metal-based plate, sheet or film coupled to the lower portion of the reaction unit (13) and/or a metal-based catalyst introduced into the lower portion of the reaction unit (13) by coating or doping,
wherein the inactivation unit (15) is made of a metal material,
wherein the third flow paths (10, 11) provided in the lower inner wall and the side inner wall, which are located under the surface of the liquid-phase material, provide a route in which raw materials introduced into the flow path guide (5) through the first flow path (7) moves to the activation unit (14), a route in which a liquid-phase electrolysis product generated in the activation unit (14) moves into the flow path guide (5), and a route through which a portion of the liquid-phase electrolysis product moving into the flow path guide (5) is circulated and returned to the activation unit (14), and
wherein the third flow path (12) provided in the upper inner wall and the third flow path (11) provided in the side inner wall, which are located above the surface of the liquid-phase material, provide a route through which the gas-phase electrolysis product generated in the activation unit (14) moves into the flow path guide (5).

2. The electrode structure according to claim 1, further comprising:
a cooling jacket (4) disposed on the other side of the electrode plate (1, 3).

3. The electrode structure according to claim 2, wherein the electrode plate (1, 3) and the cooling jacket (4) are made of the same material.

4. The electrode structure according to claim 1, wherein an area ratio of the third flow path (10, 11, 12) to the inner wall of the flow path guide (5) is 0.05 to 0.95.

5. The electrode structure according to claim 1,
wherein a ratio of the area of the activation unit (14) to the area of the reaction unit (13) is 0.1 to 0.9.

6. The electrode structure according to claim 1, wherein the activation unit includes platinum or iridium.

7. An electrolyzer comprising:
an electrode structure according to any one among claims 1 to 6; and
a diaphragm (2) disposed to face one side of the electrode plate (1, 3).

## Patentansprüche

1. Elektrodenstruktur, umfassend:
eine Elektrodenplatte (1, 3);
eine Strömungswegführung (5), die auf einer Seite der Elektrodenplatte (1, 3) entlang des Umfangs der Elektrodenplatte (1, 3) angeordnet ist;
ein unteres Durchgangsloch (6), das durch die Elektrodenplatte (1, 3) und die Strömungswegführung (5) an einem unteren Abschnitt davon verläuft;
einen ersten Strömungsweg (7), der es ermöglicht, dass die Strömungswegführung (5) und das untere Durchgangsloch (6) miteinander in Verbindung stehen;
ein oberes Durchgangsloch (8), das durch die Elektrodenplatte (1, 3) und die Strömungswegführung (5) an einem oberen Abschnitt davon verläuft;
einen zweiten Strömungsweg (9), der es ermöglicht, dass die Strömungswegführung (5) und das obere Durchgangsloch (8) miteinander in Verbindung stehen;
eine Reaktionseinheit (13), in der die Strömungswegführung (5) auf der einen Seite der Elektrodenplatte (1, 3) nicht vorgesehen ist; und
zwei oder mehr dritte Strömungswege (10, 11, 12), die in einer unteren Innenwand, einer seitlichen Innenwand und einer oberen Innenwand der Strömungswegführung (5) vorgesehen und in einem vorbestimmten Abstand voneinander beabstandet sind, wobei die dritten Strömungswege (10, 11, 12) ein Inneres der Strömungswegführung (5) und die Reaktionseinheit (13) verbinden,
wobei die Reaktionseinheit (13) eine Aktivierungseinheit (14), in der ein in die Reaktionseinheit (13) eingeführtes flüssigphasiges Material elektrolysiert wird, und eine Inaktivierungseinheit (15) umfasst, die sich oberhalb der Aktivierungseinheit (14) befindet, sodass ein aus der Aktivierungseinheit (14) erzeugtes gasphasiges Material verbleibt,
wobei die in der unteren Innenwand vorgesehenen dritten Strömungswege (10) einen Weg bereitstellen, durch den sich ein Material gleichmäßig zwischen dem Inneren der Strömungswegführung (5) und der Aktivierungseinheit der Reaktionseinheit (13) bewegen kann,
wobei die in der seitlichen Innenwand vorgesehenen dritten Strömungswege (11) einen Weg bereitstellen, durch den sich ein Material gleichmäßig zwischen dem Inneren der Strömungswegführung (5) und der Reaktionseinheit (13) bewegen kann,
wobei die in der oberen Innenwand vorgesehenen dritten Strömungswege (12) einen Weg bereitstellen, durch den sich ein Material gleichmäßig zwischen dem Inneren der Strömungswegführung (5) und der Inaktivierungseinheit der Reaktionseinheit (13) bewegen kann,
wobei die Inaktivierungseinheit (15) die Elektrodenplatte (1) ist, welche die Reaktionseinheit (13) bildet, und die Aktivierungseinheit (14) von einem unteren Ende der Reaktionseinheit (13) bis zu einer vorbestimmten Höhe vorgesehen ist, sodass die Aktivierungseinheit (14) und die Inaktivierungseinheit (15) jeweils den unteren Abschnitt und den oberen Abschnitt der Reaktionseinheit (13) unterteilen,
wobei die Aktivierungseinheit (14) eine metallbasierte Platte, ein Blech oder ein Film ist, die bzw. das mit dem unteren Abschnitt der Reaktionseinheit (13) gekoppelt ist, und/oder ein metallbasierter Katalysator ist, der durch Beschichten oder Dotieren in den unteren Abschnitt der Reaktionseinheit (13) eingebracht ist,
wobei die Inaktivierungseinheit (15) aus einem Metallmaterial besteht,
wobei die in der unteren Innenwand und der seitlichen Innenwand vorgesehenen dritten Strömungswege (10, 11), die sich unter der Oberfläche des flüssigphasigen Materials befinden, einen Weg bereitstellen, auf dem durch den ersten Strömungsweg (7) in die Strömungswegführung (5) eingeführte Ausgangsmaterialien zur Aktivierungseinheit (14) gelangen, einen Weg, auf dem sich ein in der Aktivierungseinheit (14) erzeugtes flüssigphasiges Elektrolyseprodukt in die Strömungswegführung (5) bewegt, und einen Weg, durch den ein Teil des sich in die Strömungswegführung (5) bewegenden flüssigphasigen Elektrolyseprodukts zirkuliert und zur Aktivierungseinheit (14) zurückgeführt wird, und
wobei der in der oberen Innenwand vorgesehene dritte Strömungsweg (12) und der in der seitlichen Innenwand vorgesehene dritte Strömungsweg (11), die sich oberhalb der Oberfläche des flüssigphasigen Materials befinden, einen Weg bereitstellen, durch den sich das in der Aktivierungseinheit (14) erzeugte gasphasige Elektrolyseprodukt in die Strömungswegführung (5) bewegt.

2. Elektrodenstruktur nach Anspruch 1, ferner umfassend:
einen Kühlmantel (4), der auf der anderen Seite der Elektrodenplatte (1, 3) angeordnet ist.

3. Elektrodenstruktur nach Anspruch 2, wobei die Elektrodenplatte (1, 3) und der Kühlmantel (4) aus demselben Material bestehen.

4. Elektrodenstruktur nach Anspruch 1, wobei ein Flächenverhältnis des dritten Strömungswegs (10, 11, 12) zur Innenwand der Strömungswegführung (5) 0,05 bis 0,95 beträgt.

5. Elektrodenstruktur nach Anspruch 1,
wobei ein Verhältnis der Fläche der Aktivierungseinheit (14) zur Fläche der Reaktionseinheit (13) 0,1 bis 0,9 beträgt.

6. Elektrodenstruktur nach Anspruch 1, wobei die Aktivierungseinheit Platin oder Iridium umfasst.

7. Elektrolyseur, umfassend:
eine Elektrodenstruktur nach einem der Ansprüche 1 bis 6; und
ein Diaphragma (2), das einer Seite der Elektrodenplatte (1, 3) zugewandt angeordnet ist.

## Revendications

1. Structure d'électrode, comprenant :
une plaque d'électrode (1, 3) ;
un guide de trajet d'écoulement (5) disposé sur un premier côté de la plaque d'électrode (1, 3) le long de la circonférence de la plaque d'électrode (1, 3) ;
un trou traversant inférieur (6) traversant la plaque d'électrode (1, 3) et le guide de trajet d'écoulement (5) dans une partie inférieure de celle-ci ;
un premier trajet d'écoulement (7) permettant au guide de trajet d'écoulement (5) et au trou traversant inférieur (6) de communiquer entre eux ;
un trou traversant supérieur (8) traversant la plaque d'électrode (1, 3) et le guide de trajet d'écoulement (5) dans une partie supérieure de celle-ci ;
un deuxième trajet d'écoulement (9) permettant au guide de trajet d'écoulement (5) et au trou traversant supérieur (8) de communiquer entre eux ;
une unité de réaction (13) où le guide de trajet d'écoulement (5) n'est pas disposé sur le premier côté de la plaque d'électrode (1, 3) ; et
deux ou plusieurs troisièmes trajets d'écoulement (10, 11, 12) prévus dans une paroi interne inférieure, une paroi interne latérale et une paroi interne supérieure du guide de trajet d'écoulement (5) et espacés d'un intervalle prédéterminé, lesdits troisièmes trajets d'écoulement (10, 11, 12) reliant l'intérieur du guide de trajet d'écoulement (5) à l'unité de réaction (13),
où l'unité de réaction (13) comprend une unité d'activation (14) où un matériau en phase liquide introduit dans l'unité de réaction (13) est électrolysé, et une unité d'inactivation (15) disposée au-dessus de l'unité d'activation (14) de manière à garder un matériau en phase gazeuse généré par l'unité d'activation (14),
où les troisièmes trajets d'écoulement (10) prévus dans la paroi interne inférieure présentent un trajet par lequel un matériau peut se déplacer uniformément entre l'intérieur du guide de trajet d'écoulement (5) et l'unité d'activation de l'unité de réaction (13),
où les troisièmes trajets d'écoulement (11) prévus dans la paroi interne latérale présentent un trajet par lequel un matériau peut se déplacer uniformément entre l'intérieur du guide de trajet d'écoulement (5) et l'unité de réaction (13),
où les troisièmes trajets d'écoulement (12) prévus dans la paroi interne supérieure présentent un trajet par lequel un matériau peut se déplacer uniformément entre l'intérieur du guide de trajet d'écoulement (5) et l'unité d'inactivation de l'unité de réaction (13),
où l'unité d'inactivation (15) est la plaque d'électrode (1) constituant l'unité de réaction (13), et l'unité d'activation (14) est prévue jusqu'à une hauteur prédéterminée depuis une extrémité inférieure de l'unité de réaction (13), de sorte que l'unité d'activation (14) et l'unité d'inactivation (15) séparent respectivement la partie inférieure et la partie supérieure de l'unité de réaction (13),
où l'unité d'activation (14) est une plaque, une feuille ou un film à base de métal raccordé à la partie inférieure de l'unité de réaction (13) et/ou un catalyseur à base de métal introduit dans la partie inférieure de l'unité de réaction (13) par revêtement ou dopage,
où l'unité d'inactivation (15) est constituée d'un matériau métallique,
où les troisièmes trajets d'écoulement (10, 11) prévus dans la paroi interne inférieure et la paroi interne latérale, disposés sous la surface du matériau en phase liquide, présentent un chemin où des matières premières introduites dans le guide de trajet d'écoulement (5) par le premier trajet d'écoulement (7) se déplacent vers l'unité d'activation (14), un trajet où un produit d'électrolyse en phase liquide généré dans l'unité d'activation (14) se déplace dans le guide de chemin d'écoulement (5), et un chemin par lequel une partie du produit d'électrolyse en phase liquide se déplaçant dans le guide de chemin d'écoulement (5) est mis en circulation et retourné vers l'unité d'activation (14), et
où le troisième trajet d'écoulement (12) prévu dans la paroi interne supérieure et le troisième trajet d'écoulement (11) prévu dans la paroi interne latérale, disposés au-dessus de la surface du matériau en phase liquide, présentent un chemin par lequel le produit d'électrolyse en phase gazeuse généré dans l'unité d'activation (14) se déplace dans le guide de trajet d'écoulement (5).

2. Structure d'électrode selon la revendication 1, comprenant en outre :
une chemise de refroidissement (4) disposée sur l'autre côté de la plaque d'électrode (1, 3).

3. Structure d'électrode selon la revendication 2, où la plaque d'électrode (1, 3) et la chemise de refroidissement (4) sont constituées du même matériau.

4. Structure d'électrode selon la revendication 1, où un rapport de surface entre le troisième trajet d'écoulement (10, 11, 12) et la paroi interne du guide de trajet d'écoulement (5) est compris entre 0,05 et 0,95.

5. Structure d'électrode selon la revendication 1,
où un rapport de la surface entre l'unité d'activation (14) et la surface de l'unité de réaction (13) est compris entre 0,1 et 0,9.

6. Structure d'électrode selon la revendication 1, où l'unité d'activation comprend du platine ou de l'iridium.

7. Electrolyseur, comprenant :
une structure d'électrode selon l'une des revendications 1 à 6 ; et
un diaphragme (2) disposé de manière à faire face à un côté de la plaque d'électrode (1, 3).
